# EUROPEAN PATENT APPLICATION

(11) **EP 1 876 783 A1**
(43) Date of publication of application: **09.01.2008**
(21) Application number: 06014131.4
(22) Date of filing: 07.07.2006
(51) Int. Cl.: H04L 27/26, H04L 1/00

(54) **Unequal error protection for a multicarrier transmission**

(71) Applicant: SIEMENS AKTIENGESELLSCHAFT, 80333 München (DE)
(72) Inventor: Halfmann, Rüdiger, 67697 Otterberg (DE); Lott, Matthias, 82061 Neuried (DE)

(57) **Abstract**

The invention consists of a method and apparatuses thereof arranged to transmit at least one data transmission between at least one first radio station (1) and at least one second radio station (10) in a radio communications system (1000), comprising the steps of allocating at least one portion of an available spectrum for said at least one data transmission, said at least one portion comprising of a number of adjacent sub-carriers; error protecting said at least one data transmission, wherein said error protecting is distributed in an unequal manner throughout said at least one portion allocated for said at least one data transmission, and transmitting said data transmission upon completion of said error protection.

## Description

### Field of the invention

The invention relates to the field of data transmission in radio communications systems, in particular to the area of protecting data from the effects caused by interference.

### Summary of the invention

Since the introduction of multi-carrier systems based on OFDM (Orthogonal Frequency Division Multiplexing) in radio communications by 3GPP (3^{rd} Generation Partnership Project), OFDMA (Orthogonal Frequency Division Multiple Access) the access scheme based on OFDM has been proposed as the access scheme to be used within 3GPP LTE (Long Term Evolution). Additionally, OFDMA is one air-interface mode specified in the WiMAX standard, IEEE 802.16, "Part 16: Air Interface for Fixed Broadband Wireless Access", 24/6/2004, which is also known to also as "scalable OFDMA".

As illustrated in "Signalling Overhead for ASBA in an MC-CDMA System" by Lott et al., Proceedings of the 11th European Wireless Conference (EW'05), 10 - 13 April, 2005, Nicosia, Cyprus, OFDMA allows for the exploitation of the frequency diversity of a channel in a multi-user environment in an efficient manner, i.e. the best sub-carriers within the available radio spectrum are assigned singly to respective users in order to maximise the overall capacity within the communications system. This however, causes a large amount of signalling to take place between users and APs (access points) as well as increasing the amount of processing that an AP is required to perform.

In order to reduce the signalling traffic required when allocating sub-carriers, a solution has been to allocate adjacent sub-carriers of the available spectrum to individual users for the required connection to an AP, instead of single arbitrary sub-carriers. The allocated adjacent sub-carriers form portions of the available spectrum and are also known as chunks. Within the context of the present application the terms "portion(s)", "chunk(s)" are used interchangeably to the same effect. In this manner, for example, a radio communications system having a typical available bandwidth of 80 MHz using, for example, an effective number of 1024 sub-carriers with a sub-carrier spacing of 78.125 KHz, can form 32 chunks comprising of 32 sub-carriers.

Nevertheless, the assignment of adjacent sub-carriers, does not resolve the problem caused by ICI (Inter-Carrier Interference). Adjacent sub-carriers of neighbouring chunks continue to affect each other if there is no optimal synchronisation between the allocated chunks. This is all the more pertinent, when in a radio communications system, different chunks are used in neighbouring cells by different APs or neighbouring chunks are used by different users or user equipments (UEs), which cause ICI, which manifests itself as burst errors appearing in the transmission. Consequently, the data transmitted will suffer also from the ICI present and will contain a number of errors. APs and UEs therefore require a large amount of processing power in order to protect the data to be transmitted and to remove errors that occur.

A way around this problem and reduce ICI caused by adjacent sub-carriers, is to leave sub-carriers at the edge of each the available spectrum or even at the edge of a chunk unused. This will reduce the generated ICI, as well as reducing the interference suppression required to be performed by filtering techniques at APs and UEs. However, leaving sub-carriers unused, reduces the efficiency and the capacity of the radio communications system.

A need therefore exists for a technique that counters the effects interference on transmissions in radio communications systems without reducing the efficiency and capacity of such systems.

With the present invention the above mentioned issues are resolved. The proposed technique provides a simple and efficient countering of interference when transmitting a data transmission and at the same time does not reduce in any way the efficiency and the capacity of radio communications systems when using the full amount of available radio spectrum.

The technique is achieved by the teachings contained in the independent claims.

Said independent method claim transmits at least one transmission between at least one first radio station and at least one second radio station in a radio communications system, comprising the steps of:
- allocating at least one portion of an available spectrum for said at least one data transmission, said at least one portion comprising of a number of adjacent sub-carriers;
- error protecting said at least one data transmission, wherein said error protecting is distributed in an unequal manner throughout said at least one portion allocated for said at least one data transmission, and
- transmitting said data transmission upon completion of said error protection.

Said independent access point claim comprises of means arranged to transmit at least one data transmission between said access node and at least one user equipment in a communications system, wherein:
- allocating means are adapted to allocate at least one portion of an available spectrum for said at least one data transmission, said at least one portion comprising of a number of adjacent sub-carriers;
- error protecting means are adapted to error protect said at least one data transmission, wherein said error protecting means are further adapted to distribute said error protection in an unequal manner throughout said at least one portion allocated for said at least one data transmission, and
- transceiver means are adapted to transmit said data transmission upon completion of said error protection.

Said independent user equipment claim comprises of means arranged transmit at least one data transmission between said user equipment and at least one access point in a communications system, wherein:
- transceiver means adapted to receive a message from said at least one access point over a channel, said message indicating an allocation of at least one portion of an available spectrum for said at least one data transmission, said at least one portion comprising of a number of adjacent sub-carriers;
- error protecting means are adapted to error protect said at least one transmission, wherein said error protecting means are further adapted to distribute said error protection in an unequal manner throughout said at least one portion allocated for said at least one transmission, and
- transceiver means are adapted to transmit said transmission upon completion of said error protection.

Further advantages can be seen from the dependent claims, wherein the unequal distribution of error protection comprises of implementing a stronger error protection for sub-carriers of said at least one portion lying at an edge of said at least one portion than for sub-carriers lying around a middle part of said at least one portion, thus providing an effective depth of error protection for data over all sub-carriers with a stronger protection around the edges of the allocated portion where more ICI is present, as well as providing protection for sub-carriers around the middle part of the allocated portion where ICI is not that strong.

The error protection applied comprises of a combination of a plurality of coding schemes comprised at least from a rank distance code, a Reed-Solomon code and/or a plurality of modulation schemes comprised at least from the following: a quadrature amplitude modulation scheme, a phase-shift keying modulation scheme, a binary phase-shift keying modulation scheme, thus providing an efficient and thorough error protection. The combination allowing for the depth of protection to be effected and wherein at least two modulation schemes are used at any one time in order to ensure that sub-carriers lying at the edge or around the middle are protected according to the interference present and/or expected. Since interference will be located, with a high probability, at specific sub-carriers the combination of coding and/or modulation schemes allows for the optimisation of the schemes used and thus rendering the system more efficient. Additionally, the combination of coding schemes and/or modulation schemes allows for all sub-carriers to be used for data transmission, thus ensuring that there is no reduction in efficiency as all sub-carriers within the allocated portion are used.

Furthermore, an unequally distributing the transmit power used to transmit the at least one data transmission is also effected over the at least one portion of spectrum allocated in order to further strengthen the transmission and ensure that any interference that might be present is countered by a transmission that can be clearly received. The unequal distribution of the transmit power is effected by assigning a higher transmit power for sub-carriers of the at least one portion lying at an edge of the at least one portion than for sub-carriers lying around a middle part of said at least one portion, thus further protecting the edges from the effects of ICI, but without reducing the protection around the middle.

Additionally, the inventive technique can be implemented in an access point such as a base station, a base station including a base station controller and/or a radio network controller as well as in a user equipment such as a mobile station.

### Short description of the drawings

The present invention will become more apparent from the description given herein below and from the accompanying drawings which are given by way of information only, and thus are not limitative of the present invention, and wherein:
Fig.1 depicts a radio communications system within which the inventive technique is applicable.
Fig. 2a and 2b, depict neighbouring sub-carriers causing interference in a radio communications system.
Fig. 3 depicts in a flowchart form the steps implemented by the inventive technique.
Fig. 4 shows the unequal manner distribution of the error protection.
Fig. 5 is a block diagram of an access point showing an arrangement of means implementing the inventive technique.
Fig. 6 is a block diagram of an user equipment showing an arrangement of means implementing the inventive technique.

### Detailed description of the invention

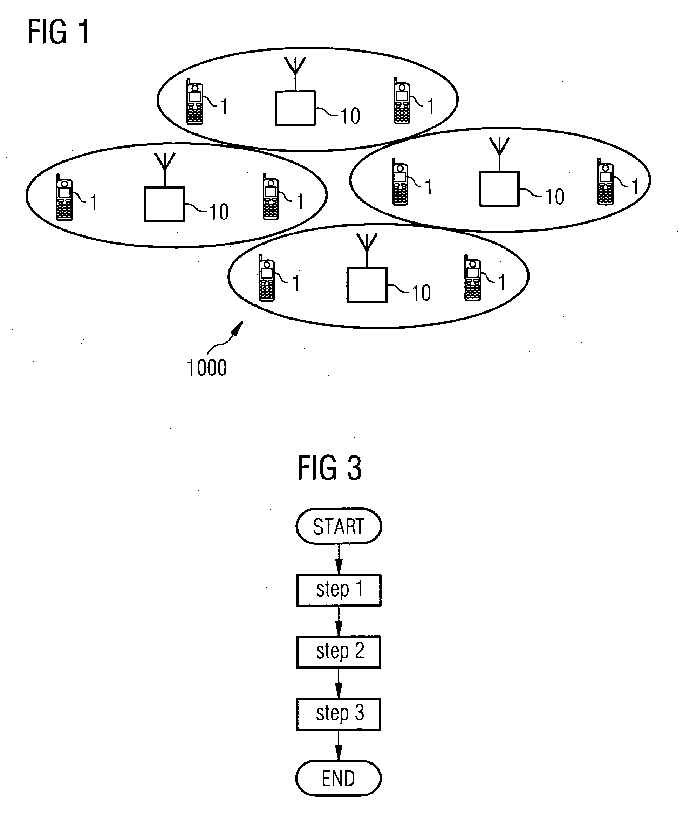

Fig. 1, depicts a radio communications system 1000 comprising of a number of first radio station 1 connected via a number of second radio station 10 to a PSTN (Public Switched Telephone Network) and/or the Internet. The first radio station 1 can be a user equipment (UE) 1 such as a mobile station, while the second radio station 10 can be an access point 10 which can be one of the following: a base station (BS), a base station (BS) including a base station controller (BSC), a radio network controller (RNC). It is further possible for the second radio station 10 to also be a relay node as well as another mobile station.

In the illustrative example shown in fig. 1, the first radio station 1 is a user equipment 1 and the second radio station 10 is an access point 10, however a person skilled in the art would be aware of the possibility of using different devices than the ones depicted in fig. 1 or even to combine the devices depicted in fig. 1 with other ones. Within radio communications system 1000, a number of accessing schemes can be applied in order to allow a user equipment 1 to access an access point 10. Such accessing schemes can be at least one of the following: CDMA (Code Division Multiple Access), TDMA (Time Division Multiple Access), FDMA (Frequency Division Multiple Access), OFDMA (Orthogonal Frequency Division Multiple Access), SDMA (Space Division Multiple Access), CSMA (Carrier Sense Multiple Access), MF-TDMA (Multi-Frequency TDMA), W-CDMA (Wideband-CDMA). In one illustrative example of the inventive technique, OFDMA is at least one such accessing scheme used, however a person skilled in the art would be aware of the possibility to use another accessing scheme or a combination of accessing schemes in radio communications system 1000.

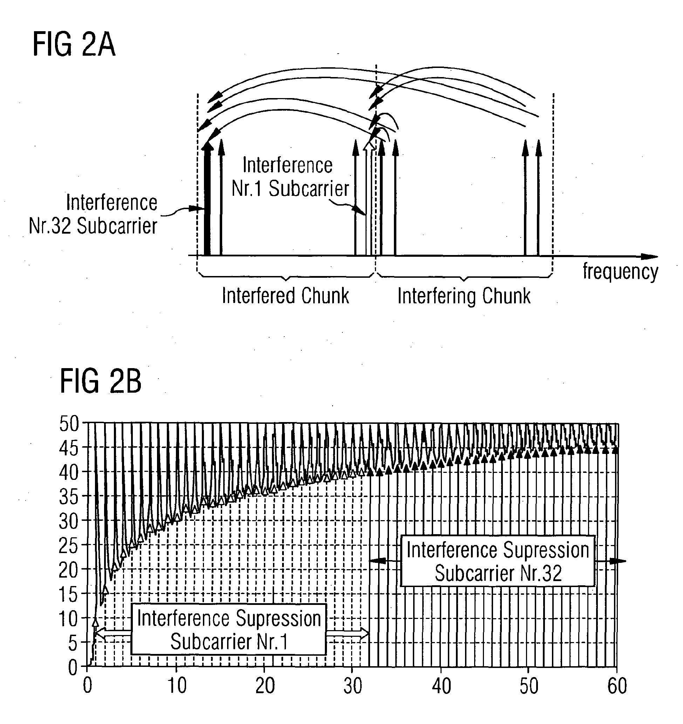

As mentioned hereinabove, the current solution to reduce ICI in radio communications systems such as the one described in fig. 1, is not efficient as sub-carriers are left unused and consequently the capacity of radio communications system 1000 is reduced. Furthermore, ICI depends also on the distance between the corresponding sub-carrier of the interfered chunk to the interfering chunk. As shown in fig. 2a and 2b, the sub-carrier located next to the interfering chunk suffers significantly more from the distortion than the sub-carrier located the farthest away from the interferer. This leads to an unequal ICI distribution within the portion or chunk of allocated spectrum. A sub-carrier located within the interfered chunk which is next to the interfering chunk, suffers more distortion due to ICI as the distance between them is very small, than a sub-carrier located away from the interfering chunk. Fig. 2a shows how the different sub-carriers of the interfering spectrum portion affect sub-carriers in the interfered spectrum portion, while fig. 2b, shows the amount of ICI that is applied on the different sub-carriers of the interfered spectrum portion or chunk. As mentioned hereinabove, it is assumed for illustrative purposes only, that radio communications system 1000 has a typical available bandwidth of 80 MHz wherein an effective number of 1024 sub-carriers are used, each with a sub-carrier spacing of 78.125 KHz, thus forming chunks or portions comprising of 32 sub-carriers.

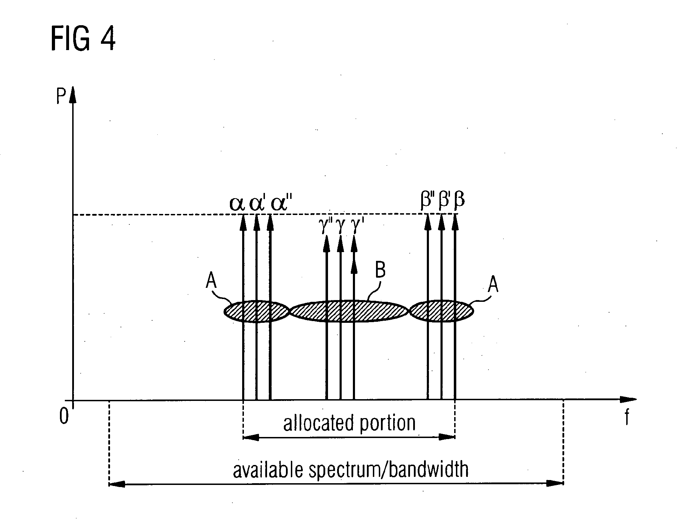

Fig. 3, depicts a flowchart indicating the steps implemented by the inventive technique. When at least one transmission is to be made between at least one user equipment 1 and at least one access point 10, a portion of an available spectrum is allocated in step 1 for said at least one transmission. The allocated portion (or chunk) comprises of a number of adjacent (or neighbouring) sub-carriers. The number of sub-carriers can depend on different parameters such as the type of transmission being effected, i.e. if the transmission is an audio data or a multimedia data, the amount of data being transmitted, the number of user equipments 1 communicating with an access point 10 etc.

Upon allocation of the portion of spectrum for the at least one transmission, said at least one transmission is error protected in step 2. The error protection is distributed in an unequal manner over the allocated portion of spectrum used for the at least one transmission. Upon completion of the error protection, the at least one transmission is transmitted in step 3.

Fig. 4, shows the unequal manner distribution of the error protection. For ease of understanding of the inventive technique, fig. 4 shows one portion (or chunk) of allocated spectrum. However it is obvious to any person skilled in the art that additional portions can be allocated which can neighbour or not the depicted allocated portion.

As mentioned hereinabove, in the illustrative example, the allocated portion comprises of 32 sub-carriers, not all of which are depicted in fig. 4, for reasons of clarity and ease of understanding. The allocated portion is bounded at on either side by sub-carriers α and β, which lie, respectively, on an lower and an upper sub-carrier frequency of the allocated portion, while a sub-carrier γ, lies on a middle frequency of the allocated portion.

According to the inventive technique, the unequal error protection comprises of implementing a stronger error protection for sub-carriers of the allocated portion that lie at an edge of the allocated portion compared to the error protection implemented for sub-carriers lying around a middle part of the allocated portion. The error protection is effected in this manner, because ICI and consequently burst errors, are greater at the edges (or borders) of the allocated chunk than around the middle part of the chunk.

This is shown in fig. 4 wherein, hatched areas A and B indicate the different error protection implemented. As can be seen sub-carriers lying at the edges of the allocated portion are error protected within hatched area A, while sub-carriers lying around the middle part of the allocated portion are error protected within hatched area B. Sub-carriers α and β which form the boundaries of the allocated portion lie within hatched area A and will have a stronger error protection than sub-carrier γ which lies in hatched area B.

Naturally, as ICI can affect numerous sub-carriers, sub-carriers lying at the edge of the allocated portion are error protected and not just α and β which form the borders of the allocated portion. This is due to the fact that during the transmission between the access point 10 and the user equipment 1, the data that is transmitted is spread across the sub-carriers that form the portion allocated. In this way a depth of error protection is achieved for the data and the effects of ICI are compensated. The number of sub-carriers lying at the edge that are error protected depends on different parameters, such as the type of data to be transmitted, a quality of service parameter indicating an importance of the data, the number of user equipments 1 actively transmitting at a particular time instant etc. This is illustrated in fig. 4 by sub-carriers α', α", β' and β". The same applies for sub-carriers lying around the middle part of the portion allocated. This is illustrated in fig. 4 by sub-carriers γ' and γ" . Also the number of sub-carriers lying at the edge that are error protected can depend on a distortion suffered by the sub-carriers or on a predefined value of a suppression rate.

As mentioned hereinabove, during the transmission data is spread over the sub-carriers comprised within the allocated portion. In practise, due to the strong protection applied at the edges A of the portion, the number of sub-carriers lying within area A will be smaller than those lying in area B, as the strong protection reduces the data rate on those sub-carriers and a large number of sub-carriers assigned to area A would lead to a reduction of the efficiency of the allocated radio spectrum. In order to achieve the maximum efficiency from the allocated radio spectrum, all sub-carriers are used for data transmission.

In a further refinement of the inventive technique, it is also possible not to use all the sub-carriers for data transmission, but depending on the amount of data to be transmitted or the anticipated and/or the existing ICI situation or other parameters, taken singly or in combination, to use a number of them and apply the inventive technique on the selected sub-carriers. The efficiency might be reduced somewhat however, the amount of processing required is reduced as is the amount of transmit power necessary for the transmission.

The error protection that is applied to the at least one transmission comprises of a combination of a plurality of coding schemes and/or a plurality of modulation schemes. In an alternative embodiment the error protection comprises of one coding scheme and/or a plurality of modulation schemes. In the above embodiments, at least two modulation schemes are used at any one time during the execution of the error protection. The combination of modulation scheme and/or coding scheme is based on an anticipated and/or an existing ICI situation around an access point 10 and/or a user equipment 1.

The modulation schemes comprise of at least the following modulation schemes: a QAM (quadrature amplitude modulation) scheme, a BPSK (binary phase-shift keying) modulation scheme, a PSK (phase-shift keying) modulation scheme. The coding schemes comprise of at least one of the following coding schemes: a rank distance code, a Reed-Solomon code.

Rank codes are constructed over extended fields *GF*(2*^{m}*). In these codes, the length of the code (i.e. the number of output bits) is defined as *n*, the message length of the code (i.e. the number of input bits) as *k* and the minimum distance between code words as d. Such codes are usually expressed in the form (*n, k, d*). In such codes there exists a maximal distance rank code with *d=n-k+1.* The number of code words that can be generated by such codes is given by the formula 2^{(*mk*)}. Each such code word can be represented by a matrix with binary entries having a size of *m* * *n.* When a (*n*, *k, d*) rank code is considered then each non-zero code matrix has a rank of at least d. This allows the correction of any pattern of errors *t* located within any *s* rows and *r* columns of a matrix provided that *t = s + r < d*/*2= (n + k + 1)*/*2.*

By constructing a rank code with a size of 2*m*, 4*m* etc., it is possible to correct respectively the 2, 4 etc. outer-most sub-carriers, that is those sub-carriers lying around the edge of the allocated chunk of spectrum, from burst errors caused by ICI. Thus, in relation to fig. 4, sub-carriers α, α', β and β' can be protected when using a 2*m* sized rank code, or α, α', α", α"', β, β', β", β"' when using a 4*m* sized rank code and so on depending on the amount of protection required. The choice of size for the rank code depends on the anticipated and/or the existing ICI situation around an access point 10 and/or a user equipment 1.

Access point 10 and/or user equipment 1, measure the strength of received transmissions, the number of errors, such as burst errors, detected in the received transmissions and generate statistics. The values of the measurements are then compared with, for example, pre-defined thresholds which indicate the size of the rank code to be chosen and by extension the number of sub-carriers that are protected. Additionally, access node 10 measures and takes into account the number of user equipments 1 that are present and communicating with it, when choosing the size of the code to be implemented. Similarly, to the abovementioned rank codes, Reed-Solomon codes can also be used to protect transmissions from ICI along the same lines.

In one illustrative embodiment one coding scheme is used for the whole allocated portion of spectrum. In another embodiment a plurality of coding schemes are used, wherein for example, rank codes are used to protect sub-carriers lying at the edge of the allocated portion of spectrum , i.e. sub-carriers α, α', β, β' etc, while Reed-Solomon codes are used to protect sub-carriers lying around a middle part of the allocated portion of spectrum, i.e. sub-carriers γ, γ', γ". When using a plurality of coding schemes, both access point 10 and/or user equipment 1 use abovementioned values and thresholds in order to determine the size of code to be chosen as well as the number of coding schemes to be used.

As mentioned hereinabove, the modulation schemes used by the inventive technique comprise of at least the following modulation schemes: QAM, BPSK, PSK. In one embodiment, for example, sub-carriers at the edges of the allocated portion of spectrum use BPSK while the ones lying around the middle part of the portion use 16-QAM. In another embodiment, sub-carriers at the edges of the allocated portion of spectrum use BPSK while the ones lying around the middle part of the portion use 8-PSK. In a further embodiment, sub-carriers at the edges of the allocated portion of spectrum use 8-PSK while the ones lying around the middle part of the portion use 16-QAM. At least two modulation schemes are used at any one time in combination, in order to provide the error protection for the transmission.

A user equipment 1 and/or an access point 10, choose the combination of modulation schemes to be used based upon measured and/or predicted SINR (signal-to-interference plus noise ratio) level. Access point 10 and/or user equipment 1, measure the SINR of received transmissions detected in the received transmissions and generate statistics. From these statistics, access point 10 and user equipment 1 generate values for the predicted SINR that will affect transmissions. The values of the measurements are then compared with, for example, pre-defined thresholds which indicate the type and combination of modulation schemes to be used and on which sub-carriers the modulation schemes are to be applied.

In a further refinement of the above embodiments when combining modulation schemes and/or coding schemes, unequal distribution of the transmission power used is also implemented. Sub-carriers lying at the edge of the allocated portion of spectrum are assigned a higher transmit power than sub-carriers lying around a middle part of the allocated portion of spectrum. This is done in order to compensate for the higher ICI present at the edges of the allocated portion. With reference to fig. 4, sub-carriers lying within hatched area A, for example sub-carriers α, α', β, β' etc, are transmitted at a higher transmit power than those lying within hatched area B. In yet a further refinement, it is also possible to individually select sub-carriers that are to be assigned a higher transmit power, for example assigning a higher transmit power to sub-carriers α and β that lie on the border of the allocated portion of spectrum. This can be done for example when the measured and/or anticipated ICI is low, the number of burst errors detected is low or when transmissions are effected over sub-carriers that are not close to each other.

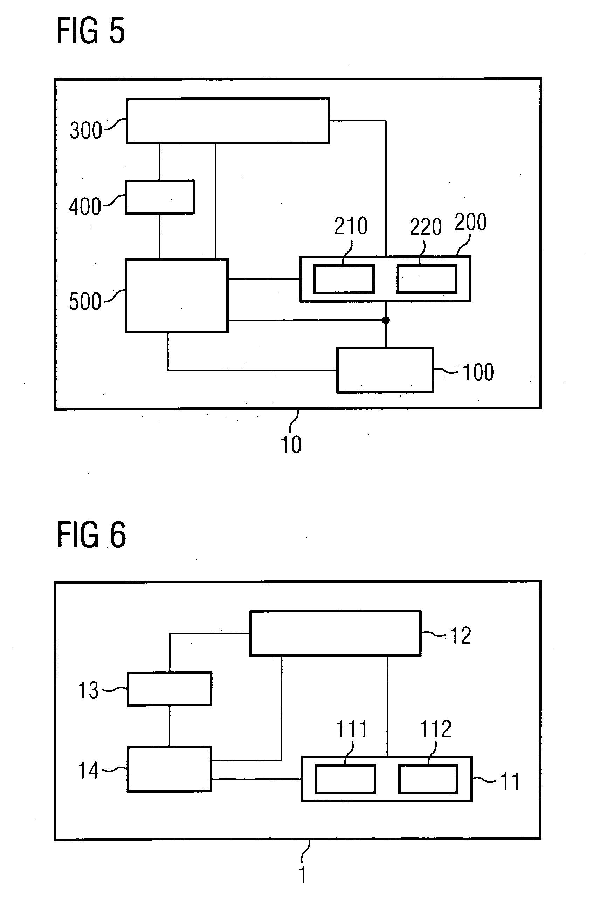

Fig. 5, shows in block diagram form an illustrative implementation of an access point 10 comprising means arranged to execute the inventive technique. Access point 10 can be at least one of the following: a base station, a base station including a base station controller, a radio network controller.

Access point 10 comprises of allocating means 100 arranged to allocate at least one portion of an available spectrum (or bandwidth) for at least one transmission, wherein the allocated portion comprises of a number of adjacent sub-carriers. Allocating means 100 are coupled to error protecting means 200 arranged to error protect the at least one transmission from access point 10 to at least one user equipment 1. Error protecting means 200 are further arranged to distribute the error protection in an unequal manner throughout the allocated portion of available spectrum used for the at least one transmission. Once the at least one transmission has been error protected, transceiver means 300 are arranged to transmit it. Transceiver means 300 are also further arranged to receive transmissions from user equipments 1.

In order to achieve the unequal error protection of the at least one transmission, error protecting means 200 are further arranged to implement a stronger error protection for sub-carriers lying at an edge of the allocated portion of available spectrum than for sub-carriers lying around a middle part of the allocated portion.

Error protecting means 200 are further adapted to combine a plurality of coding schemes and/or a plurality of modulation schemes when error protecting the at least one transmission in order to implement the unequal error protection. Error protecting means 200 can be hardware implemented in one or more processors, in such a manner that as to form one unit combining the functionality of coding and modulating the error protection or alternatively error protecting means 200 can comprise of separately coupled hardware units implementing coding means 210 and modulating means 220. In both examples error protecting means 200 are coupled to control means 500 which are arranged to control error protecting means 200 and also access point 10. In an alternative embodiment the error protection means 200 are arranged to combine one coding scheme and/or a plurality of modulation schemes.

In the above embodiments, at least two modulation schemes are used at any one time during the execution of the error protection. The combination of modulation scheme and/or coding scheme is based on an anticipated and/or an existing ICI situation around access point 10. Error protecting means 200 (or in an alternative embodiment modulating means 220) are further arranged to use modulation schemes that comprise of at least the following modulation schemes: a QAM scheme, a BPSK scheme, a PSK scheme. Error protecting means 200 (or in an alternative embodiment coding means 210) are further arranged to use coding schemes that comprise of at least one of the following coding schemes: a rank distance code, a Reed-Solomon code.

Control means 500 are further adapted to measure and/or predict SINR detected in transmissions received via transceiver means 300, and generate statistics. From these statistics, control means are further adapted to generate values for the predicted SINR that will affect transmissions. Control means 500 are further arranged to compare these values with, for example, pre-defined thresholds which indicate the type and combination of modulation schemes to be used and on which sub-carriers the modulation schemes are to be applied. The pre-defined thresholds are stored locally within control means 500 or can be transmitted from a central network management device to access point 10 upon request from control means 500. Control means 500 are further adapted to provide error protecting means 200 or modulating means 220 with information resulting from the comparison enabling error protecting means 200 or modulating means 220 to use the appropriate modulation schemes.

As mentioned hereinabove, the modulation schemes used by the inventive technique comprise of at least the following modulation schemes: QAM, BPSK, PSK. In one embodiment, error protecting means 200 or modulating means 220 are arranged to use, for example, BPSK for sub-carriers at the edges of the allocated portion of spectrum while for sub-carriers lying around the middle part of the portion they use 16-QAM. In another embodiment, error protecting means 200 or modulating means 220 are arranged to use BPSK for sub-carriers at the edges of the allocated portion of spectrum while for sub-carriers lying around the middle part of the portion 8-PSK is used. In a further embodiment, error protecting means 200 or modulating means 220 are arranged to use 8-PSK for sub-carriers at the edges of the allocated portion of spectrum while for ones lying around the middle part of the portion 16-QAM is used.

Control means 500 are further arranged to measure the strength of received transmissions, the number of errors, such as burst errors, detected in the received transmissions, the number of user equipments 1 present and in communication with it, and to generate statistics. The values of the measurements are then compared with, for example, pre-defined thresholds, as mentioned above, which indicate the size of the code, such as a rank code or a Reed-Solomon code, to be chosen and by extension the number of sub-carriers that are protected. Control means 500 are further adapted to provide error protecting means 200 or coding means 210 with information resulting from the comparison enabling error protecting means 200 or coding means 210 to use coding schemes with the appropriate size for the required protection.

In one illustrative embodiment error protecting means 200 or coding means 210 are further arranged to use one coding scheme for the whole allocated portion of spectrum. In another embodiment error protecting means 200 or coding means 210 are further arranged to use a plurality of coding schemes, wherein for example, rank codes are used to protect sub-carriers lying at the edge of the allocated portion of spectrum , i.e. sub-carriers α, α', β, β' etc, while Reed-Solomon codes are used to protect sub-carriers lying around a middle part of the allocated portion of spectrum, i.e. sub-carriers γ, γ', γ".

In a further refinement of the above embodiments when combining modulation schemes and/or coding schemes, unequal distribution of the transmission power used is also implemented. Sub-carriers lying at the edge of the allocated portion of spectrum are assigned a higher transmit power than sub-carriers lying around a middle part of the allocated portion of spectrum. This is done in order to compensate for the higher ICI present at the edges of the allocated portion. For example, with reference to fig. 4, sub-carriers lying within hatched area A, for example sub-carriers α, α', β, β' etc., are transmitted at a higher transmit power than those lying within hatched area B. In yet a further refinement, it is also possible to individually select sub-carriers that are to be assigned a higher transmit power, for example assigning a higher transmit power to sub-carriers α and β that lie on the border of the allocated portion of spectrum. This can be done for example when the measured and/or anticipated ICI is high, the number of burst errors detected is large or when transmissions are effected over sub-carriers that are not close to each other.

The unequal power distribution is effected when, after error protection, the at least one transmission is ready to be transmitted by transceiver means 300. At that point, control means 500, are further arranged to instruct transmit power means 400 to assign a certain transmit power value for the transmission of certain sub-carriers and another transmit power value for other sub-carriers.

In the abovementioned embodiments, transceiver means 300 are further arranged to transmit a message, such as a broadcast message over a broadcast channel, indicating the allocation of the portion (or chunk) of the available spectrum or the allocations of chunks, once allocating means 100 have performed the allocation. This broadcasted message enables user equipments 1 that do not have the ability to allocate portions of available spectrum themselves, to receive it and then use the allocation indicated when transmitting.

Transceiver means 300 are also further arranged, in the event that a plurality of user equipments 1 are present and transmitting to access point 10, to further include in the message a portion to user equipment designation, for example a user equipment identifier with a specific allocated portion. This is advantageous when a plurality of user equipments do not have the ability to allocate portions of available spectrum themselves, and in this way they are able to transmit without danger of causing or suffering ICI from user equipments using sub-carriers allocated in neighbouring portions or of using identical portions. Transceiver means 300 are also further arranged to transmit a message indicating the allocation of the portion (or chunk) of the available spectrum once allocating means 100 have performed the allocation, over a dedicated channel to a user equipment 1 so that the user equipment 1 is made aware of what portion of the spectrum it has to use and what protection techniques it has to apply.

Fig. 6, shows in block diagram form an illustrative implementation of an user equipment 1 comprising means arranged to execute the inventive technique.

User equipment 1 comprises of transceiver means 12 arranged to receive a message from said at least one access point 10 over a channel such as a broadcast channel or a dedicated channel, the received message indicating an allocation of at least one portion of an available spectrum for said at least one data transmission made by the at least one access point 10, the at least one portion comprising of a number of adjacent sub-carriers. Transceiver means 12 are coupled to error protecting means 11 arranged to error protect the at least one transmission from user equipment 1 to at least one access point 10. Error protecting means 11 are further arranged to distribute the error protection in an unequal manner throughout the allocated portion of available spectrum used for the at least one transmission. Once the at least one transmission has been error protected, transceiver means 12 are arranged to transmit it to the at least one access point 10. In order to achieve the unequal error protection of the at least one transmission, error protecting means 11 are further arranged to implement a stronger error protection for sub-carriers lying at an edge of the allocated portion of available spectrum than for sub-carriers lying around a middle part of the allocated portion.

Error protecting means 11 are further adapted to combine a plurality of coding schemes and/or a plurality of modulation schemes when error protecting the at least one transmission in order to implement the unequal error protection. Error protecting means 11 can be hardware implemented in one or more processors, in such a manner that as to form one unit combining the functionality of coding and modulating the error protection or alternatively error protecting means 11 can comprise of separately coupled hardware units implementing coding means 111 and modulating means 112. In both examples error protecting means 11 are coupled to control means 14 which are arranged to control error protecting means 11 and also user equipment 1. In an alternative embodiment the error protection means 11 are arranged to combine one coding scheme and/or a plurality of modulation schemes.

In the above embodiments, at least two modulation schemes are used at any one time during the execution of the error protection. The combination of modulation scheme and/or coding scheme is based on an anticipated and/or an existing ICI situation around user equipment 1. Error protecting means 11 (or in an alternative embodiment modulating means 112) are further arranged to use modulation schemes that comprise of at least the following modulation schemes: a QAM scheme, a BPSK scheme, a PSK scheme. Error protecting means 11 (or in an alternative embodiment coding means 111) are further arranged to use coding schemes that comprise of at least one of the following coding schemes: a rank distance code, a Reed-Solomon code.

Control means 14 are further adapted to measure and/or predict SINR detected in transmissions received via transceiver means 12, and generate statistics. From these statistics, control means 14 are further adapted to generate values for the predicted SINR that will affect transmissions. Control means 14 are further arranged to compare these values with, for example, pre-defined thresholds which indicate the type and combination of modulation schemes to be used and on which sub-carriers the modulation schemes are to be applied. The pre-defined thresholds are stored locally within control means 15. Control means 14 are further adapted to provide error protecting means 11 or modulating means 112 with information resulting from the comparison enabling error protecting means 11 or modulating means 112 to use the appropriate modulation schemes.

As mentioned hereinabove, the modulation schemes used by the inventive technique comprise of at least the following modulation schemes: QAM, BPSK, PSK. In one embodiment, error protecting means 11 or modulating means 112 are arranged to use, for example, BPSK for sub-carriers at the edges of the allocated portion of spectrum while for sub-carriers lying around the middle part of the portion they use 16-QAM. In another embodiment, error protecting means 11 or modulating means 112 are arranged to use BPSK for sub-carriers at the edges of the allocated portion of spectrum while for sub-carriers lying around the middle part of the portion 8-PSK is used. In a further embodiment, error protecting means 11 or modulating means 112 are arranged to use 8-PSK for sub-carriers at the edges of the allocated portion of spectrum while for ones lying around the middle part of the portion 16-QAM is used.

Control means 14 are further arranged to measure the strength of received transmissions, the number of errors, such as burst errors, detected in the received transmissions and to generate statistics. The values of the measurements are then compared with, for example, pre-defined thresholds, as mentioned above, which indicate the size of the code, such as a rank code or a Reed-Solomon code, to be chosen and by extension the number of sub-carriers that are protected. Control means 14 are further adapted to provide error protecting means 11 or coding means 111 with information resulting from the comparison enabling error protecting means 11 or coding means 111 to use coding schemes with the appropriate size for the required protection.

In one illustrative embodiment error protecting means 11 or coding means 111 are further arranged to use one coding scheme for the whole allocated portion of spectrum. In another embodiment error protecting means 11 or coding means 111 are further arranged to use a plurality of coding schemes, wherein for example, rank codes are used to protect sub-carriers lying at the edge of the allocated portion of spectrum, i.e. sub-carriers α, α', β, β' etc, while Reed-Solomon codes are used to protect sub-carriers lying around a middle part of the allocated portion of spectrum, i.e. sub-carriers γ, γ', γ".

In a further refinement of the above embodiments when combining modulation schemes and/or coding schemes, unequal distribution of the transmission power used is also implemented. Sub-carriers lying at the edge of the allocated portion of spectrum are assigned a higher transmit power than sub-carriers lying around a middle part of the allocated portion of spectrum. This is done in order to compensate for the higher ICI present at the edges of the allocated portion. For example, with reference to fig. 4, sub-carriers lying within hatched area A, for example sub-carriers α, α', β, β' etc, are transmitted at a higher transmit power than those lying within hatched area B. In yet a further refinement, it is also possible to individually select sub-carriers that are to be assigned a higher transmit power, for example assigning a higher transmit power to sub-carriers α and β that lie on the border of the allocated portion of spectrum. This can be done for example when the measured and/or anticipated ICI is low, the number of burst errors detected is low or when transmissions are effected over sub-carriers that are not close to each other.

The unequal power distribution is effected when, after error protection, the at least one transmission is ready to be transmitted by transceiver means 12. At that point, control means 14, are further arranged to instruct transmit power means 13 to assign a certain transmit power value for the transmission of certain sub-carriers and another transmit power value for other sub-carriers.

In the event that a user equipment 1 receives a message over a broadcast channel from an access point 10, the message received indicating a portion allocation made by the access point 10, user equipment 1 is further adapted to use the allocation provided by the access point 10. If however no such message is received, user equipment 1, will allocate a portion of available spectrum as already explained hereinabove. If such a message is received after user equipment 1 has already allocated a portion, then for the at least one transmission being effected, the allocation made by user equipment 1 is kept. After the end of the at least one transmission, the allocation received in the message is used by user equipment 1.

Although the invention has been described in terms of a preferred embodiment described herein, those skilled in the art will appreciate other embodiments and modifications which can be made without departing from the scope of the teachings of the invention. All such modifications are intended to be included within the scope of the claims appended hereto.

## Claims

1. Method for transmitting at least one data transmission between at least one first radio station (1) and at least one second radio station (10) in a radio communications system (1000), comprising the steps of:
- allocating at least one portion of an available spectrum for said at least one data transmission, said at least one portion comprising of a number of adjacent sub-carriers;
- error protecting said at least one data transmission, wherein said error protecting is distributed in an unequal manner throughout said at least one portion allocated for said at least one data transmission, and
- transmitting said data transmission upon completion of said error protection.

2. Method according to claim 1, wherein said unequal distribution of error protection comprises of implementing a stronger error protection for sub-carriers (α, α', β, β') of said at least one portion lying at an edge (A) of said at least one portion than for sub-carriers (γ, γ', γ") lying around a middle part (B) of said at least one portion.

3. Method according to claims 1 or 2, wherein said error protection comprises of a combination of a plurality of coding schemes and/or a plurality of modulation schemes.

4. Method according to claim 3, wherein at least two modulation schemes of said plurality are used at any one time in said combination.

5. Method according to claims 3 or 4, wherein said plurality of modulation schemes comprise at least the following:
a quadrature amplitude modulation scheme, a phase-shift keying modulation scheme, a binary phase-shift keying modulation scheme.

6. Method according to claim 3, wherein said coding scheme comprises at least one of the following: a rank distance code, a Reed-Solomon code.

7. Method according to any one of the previous claims 1 to 6, wherein said step of transmitting further comprises the step of unequally distributing a transmit power over said at least one portion used for transmitting said at least one data transmission.

8. Method according to claim 7, wherein said unequal distribution of said transmit power comprises of assigning a higher transmit power for sub-carriers (α, α', β, β') of said at least one portion lying at an edge (A) of said at least one portion than for sub-carriers (γ, γ', γ") lying around a middle part (B) of said at least one portion.

9. Method according to any one of the previous claims 1 to 8, wherein at least an orthogonal frequency division multiple access technique is used for transmitting said at least one data transmission.

10. Access point (10) comprising means arranged for transmitting at least one data transmission between said access point (10) and at least one user equipment (1) in a communications system (1000), comprising of:
- allocating means (100) adapted to allocate at least one portion of an available spectrum for said at least one data transmission, said at least one portion comprising of a number of adjacent sub-carriers;
- error protecting means (200) adapted to error protect said at least one data transmission, wherein said error protecting means (200) are further adapted to distribute said error protection in an unequal manner throughout said at least one portion allocated for said at least one data transmission, and
- transceiver means (300) adapted to transmit said data transmission upon completion of said error protection.

11. Access point (10) according to claim 10, wherein said access point is at least one of the following: a base station, a base station including a base station controller, a radio network controller.

12. User equipment (1) comprising means arranged for transmitting at least one data transmission between said user equipment (1) and at least one access point (10) in a communications system (1000), comprising of:
- transceiver means (13) adapted to receive a message from said at least one access point (10) over a channel, said message indicating an allocation of at least one portion of an available spectrum for said at least one data transmission, said at least one portion comprising of a number of adjacent sub-carriers;
- error protecting means (12) adapted to error protect said at least one data transmission, wherein said error protecting means are further adapted to distribute said error protection in an unequal manner throughout said at least one portion allocated for said at least one data transmission, and
- transceiver means (13) further adapted to transmit said data transmission upon completion of said error protection.

13. User equipment (1) according to claim 12, wherein said user equipment (1) is a mobile station.

14. Radio communications system (1000) comprising at least one access point (10) according to claims 10 to 11 and at least one user equipment (1) according to claims 12 to 13.
